# EUROPÄISCHE PATENTANMELDUNG

(11) **EP 4 238 856 A1**
(43) Veröffentlichungstag der Anmeldung: **06.09.2023**
(21) Anmeldenummer: 23159450.8
(22) Anmeldetag: 01.03.2023
(51) Int. Cl.: B62J 1/08

(54) **ELEKTROFAHRRAD MIT FAHRRAD-AKKUMULATOR UND SATTELKLEMME HIERFÜR**

(30) Priorität: 01.03.2022 DE 202022101148 U
(71) Anmelder: Kettler Alu-Rad GmbH, 50739 Köln (DE)
(72) Erfinder: FIEGL, Thomas, 64367 Mühltal (DE); POHL, Achim, 64342 Seeheim-Jugenheim (DE)
(74) Vertreter: Patentanwälte Buschhoff Hennicke Althaus

(57) **Zusammenfassung**

Die Erfindung betrifft eine Elektrofahrrad mit einem zumindest ein Sattelrohr 20 aufweisenden Fahrradrahmen 1, mit einem am Sattelrohr über Akkuhalterungen 41, 42 lösbar anordbaren Fahrrad-Akkumulator 40, wobei eine obere Akkuhalterung 42 mehrere Befestigungsstellen aufweist, und mit einer am oberen Ende des Sattelrohrs 20 angeordneten Sattelklemme 30. Um den Sitzkomfort und einen niedrigen Schwerpunkt insbesondere für kleine Personen bei Fahrrädern mit kleinen Rahmengrößen auch dann gewährleisten zu können, wenn größere Akkumulatoren verbaut werden, ist erfindungsgemäß vorgesehen, dass die obere Befestigungsstelle 32 der oberen Akkuhalterung an der Sattelklemme 30 angeordnet ist. Die Erfindung betrifft auch eine hierfür geeignete Sattelklemme 30 mit einer Befestigungsstelle 32 für eine obere Akkuhalterung.

## Beschreibung

Die Erfindung betrifft ein Elektrofahrrad mit einem zumindest ein Sattelrohr aufweisenden Fahrradrahmen, mit einem am Sattelrohr über eine untere Akkuhalterung und eine obere Akkuhalterungen lösbar anordbaren Fahrrad-Akkumulator, und mit einer am oberen Ende des Sattelrohrs angeordneten Sattelklemme zur höhenverstellbaren Fixierung eines am Sattelrohr abgestützten Fahrradsattels, wobei die obere Akkuhalterung wenigstens zwei voneinander in der Höhe beanstandete Befestigungsstellen am Elektrofahrrad aufweist. Die Erfindung betrifft auch eine Sattelklemme für ein Elektrofahrrad, wobei mit der Sattelklemme eine höhenverstellbare Fixierung eines am Sattelrohr abgestützten Fahrradsattels ermöglicht wird und wobei die Sattelklemme einen Klemmhebel und eine Klemmschelle aufweist und die Klemmschelle auf ein oberes Ende des Sattelrohrs aufschiebbar ist.

Es existieren unterschiedliche Positionen, an denen ein Fahrrad-Ackumulator an einem Elektrofahrrad angebracht werden kann. Bei manchen Fahrrädern wird auch eine zweite Anbringposition vorgesehen, um zwei Akkumulatoren am Elektrofahrrad vorzusehen und hierdurch die Reichweite gegebenenfalls zu verdoppeln.

Eine mögliche bekannte Anbringposition für den Akkumulator befindet sich - bezogen auf die Fahrtrichtung - an der Rückseite des Sattelrohrs. Je nach Rahmengröße des Fahrrades ist das am Fahrradrahmen verwendete Sattelrohr unterschiedlich lang. Für kleine Rahmengrößen, aber auch bei Lastenfahrrädern existieren Fahrradrahmen mit sehr kurzen Sattelrohr-Längen. Dies erschwert bzw. verhindert die Anbringung eines Akkumulators gegebenenfalls zusätzlich am Sattelrohr. Eine ähnliche Problematik stellt sich bei der Entwicklung und Markteinführung neuer Generationen von Akkumulatoren, die zur Ermöglichung einer höheren Leistung größere Bauformen aufweisen, und insbesondere länger werden.

Aufgabe der Erfindung ist es, den Sitzkomfort und einen niedrigen Schwerpunkt insbesondere für kleine Personen bei Fahrrädern mit kleinen Rahmengrößen auch dann gewährleisten zu können, wenn größere Akkumulatoren verbaut werden sollen.

Zur Lösung dieser Aufgabe wird mit der Erfindung vorgeschlagen, dass die obere Befestigungsstelle der oberen Akkuhalterung an der Sattelklemme angeordnet ist. Wenn eine der Befestigungsstellen an die Sattelklemme verlegt wird, können längere Akkumulatoren befestigt werden ohne dass die Stabilität der Befestigung beeinträchtigt wird, weil zumindest eine der Befestigungsstellen für die obere Akkuhalterung weiterhin am Sattelrohr verbleibt. Mit der Sattelklemme wird mithin zugleich hinsichtlich der Akkubefestigung eine Verlängerung des Sattelrohr bewirkt, wodurch sich die niedrigste Sitzposition für den Nutzer allenfalls geringfügig nach oben verschiebt.

Bei der insbesondere bevorzugten Ausgestaltung weist die untere Ackuhalterung wenigstens zwei, besonders vorzugsweise genau zwei, voneinander in der Höhe beanstandete Befestigungsstellen am Elektrofahrrad aufweist, wobei beide Befestigungsstellen am Sattelrohr ausgebildet sind. Eine Verschiebung des unteren Akkuhalters ist im Regelfall nicht möglich, weil meist ohnehin schon die niedrigste Position bei der Rahmenkonstruktion gewählt und vorgegeben wurde.

Besonders vorteilhaft ist, wenn die Sattelklemme einen Klemmhebel und eine Klemmschelle aufweist und die Klemmschelle auf ein oberes Ende des Sattelrohrs aufschiebbar ist und eine Befestigungseinrichtung aufweist, die eine der Befestigungsstellen für die obere Ackuhalterung bildet. Bei der besonders einfachen Ausgestaltung bestehen die Befestigungsstellen am Sattelrohr und die Befestigungsstelle an der Sattelklemme jeweils aus Gewindelöchern, die vorzugsweise auf einer Längsachse liegen, die parallel zur Rohrachse des Sattelrohr verläuft. Aber auch andere Befestigungsmöglichkeiten könnten konstruktiv vorgesehen sein, einschließlich Gewindestifte am Sattelrohr bzw. an der Sattelklemme.

Die vorgenannte Aufgabe wird auch durch eine Sattelklemme gelöst, bei der erfindungsgemäß die Klemmschelle eine Befestigungseinrichtung aufweist, die eine Befestigungsstelle für eine obere Akkuhalterung bildet.

Besonders vorteilhaft bei einer Sattelklemme bzw. einem mit dieser Sattelklemme versehenen Elektrofahrrad ist, wenn die Klemmschelle eine Vorderseite aufweist, an der der Klemmhebel angeordnet ist, und eine Hinterseite aufweist, an der die Befestigungseinrichtung ausgebildet ist, wobei die Klemmschelle an der Hinterseite eine größere Höhe aufweist als an der Vorderseite. Auch dies minimiert den Einfluss auf die niedrigste Sitzposition, obwohl längere Akkumulatoren am Fahrradrahmen befestigt werden können.

Zur Verbesserung der Bedienungsfreundlichkeit ist insbesondere vorteilhaft, wenn der Klemmhebel eine flügelartig gebogene Grifffläche dergestalt aufweist, dass die Grifffläche im Schließzustand mit einem oberen Rand an der Klemmschelle anliegt und mit einem unteren Rand vom Außenumfang der Klemmschelle beabstandet liegt.

Weiter vorteilhaft für ein Elektrofahrrad ist, wenn das Sattelrohr aus einem Profil, insbesondere Stranggussprofil mit einem Rundrohrabschnitt und einem integral den Rundrohrabschnitt erweiterten Kammerabschnitt mit flacher Außenfläche besteht, wobei die Befestigungsstellen an der flachen Außenfläche ausgebildet sind. Insbesondere bei dieser Ausgestaltung ist vorteilhaft, wenn auch die Sattelklemme an der Hinterseite mit einem Flachabschnitt mit flacher Außenfläche versehen ist und/oder die Umfangsfläche der Sattelklemme im Wesentlichen dieselbe Form und Größe hat wie die Umfangskontur des Sattelrohrs.

Die Variabilität hinsichtlich der Sattelklemme wird zusätzlich erhöht, wenn gemäß einer weiter vorteilhaften Ausgestaltung die Hinterseite der Sattelklemme mit einer nach unten offenen und nach oben geschlossenen Einschubkammer für einen vorzugsweise mit einem Gewindeloch versehenen und in die Einschubkammer einschiebbaren Befestigungseinsatz versehen ist.

Gemäß einer Ausführungsvariante kann die Sattelklemme an ihrer Unterseite mit Zentrierstiften oder Zentrierzapfen versehen sein, die ausgelegt sind, in einen Kammerabschnitt am Sattelrohr als Zentrierhilfe und/oder Verdrehsicherung vorzugsweise formschlüssig einzufassen.

Weitere Vorteile und Ausgestaltungen eines erfindungsgemäßen Elektrofahrrades mit entsprechend ausgebildeter Sattelklemme ergeben sich aus der nachfolgenden Beschreibung eines in der Zeichnung schematisch gezeigten bevorzugten Ausführungsbeispiels. In der Zeichnung zeigen:
- **FIG 1**: in Seitenansicht, schematisch stark vereinfacht, einen Teilbereich eines Fahrradrahmens für ein Elektrofahrrad mit einem hinter dem Sattelrohr erfindungsgemäß befestigten Fahrrad-Akkumulator;
- **FIG 2**: in Explosionsdarstellung, schematisch stark vereinfacht, das Sattelrohr, den Akkumulator und die zur Befestigung des Ackumulators verwendeten Elemente in Explosionsdarstellung;
- **FIG 3**: in perspektivischer Ansicht das obere Ende eines Sattelrohr mit montierter Sattelklemme nach der Erfindung;
- **FIG 4**: in perspektivische Ansicht die Anordnung aus Figur 3 geringfügig seitlich gedreht;
- **FIG 5**: das Sattelrohr mit montierter Sattelklemme aus Figur 3 in Draufsicht von oben;
- **FIG 6**: anhand eines schematisch angedeuteten Schnitts durch ein Sattelrohr die Sattelklemme in Ansicht von unten; und
- **FIG 7**: das bevorzugte Querschnittsprofil für ein Sattelrohr.

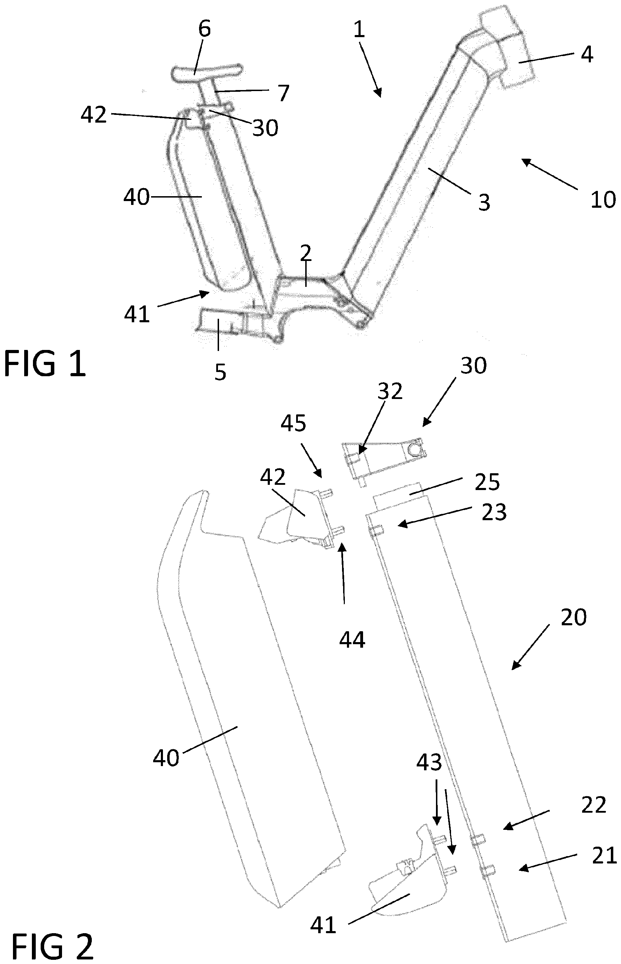

In Figur 1 ist insgesamt mit Bezugszeichen 10 ein Elektrofahrrad bezeichnet, von welchem allerdings nur der Fahrradrahmen 1 teilweise dargestellt ist. Der Fahrradrahmen 1 weist eine Motoraufhängung 2 als zentrales Element auf, von welcher aus sich in Fahrtrichtung nach vorne ein Unterrohr 3 erstreckt, an dessen vorderen Ende wiederum ein Steuerrohr 4 zur drehbaren Aufnahme und Abstützung einer Vorderradgabel (nicht dargestellt) über ein Lenkrohr angeschlossen ist. An der Motoraufhängung 2 ist ferner eine Kettenstrebe 5 angeschlossen, und außerdem auch ein Sattelrohr 20. Im Sattelrohr 20 wiederum wird ein Sattel über eine Sitzstange 7 befestigt, die höhenverstellbar im Sattelrohr nach oben und unten verschoben werden kann. Die Höhe der Sitzposition wird mit einer Sattelklemme 30 festgelegt, die am oberen Ende des Sattelrohrs 20 angeordnet und in an sich bekannter Weise auf das obere Ende der Sattelklemme 20 aufgeschoben ist. Zur Energieversorgung eines an der Motoraufhängung 2 aufgehängten Elektromotors dient ein Fahrrad-Akkumulator 40, der bezogen auf die Fahrtrichtung an der Hinterseite oder Rückseite des Sattelrohrs 20 mittels einer unteren, in Figur 1 nur angedeuteten (und verdeckt hinter dem Akkumulator 40 liegenden) Akkuhalterung 41 und einer oberen Akkuhalterung 42 am Fahrradrahmen befestigt ist.

Die Figur 2 verdeutlicht anhand der Explosionsdarstellung die Befestigung des Akkumulators 40 mittels der beiden Akkuhalterungen 41,42 am Sattelrohr 20. Die untere Akkuhalterung 41 ist im gezeigten Ausführungsbeispiel an zwei auf einer Längsachse höhenversetzt zueinander angeordneten Befestigungsstellen 21,22 an der Rückseite des Sattelrohrs 20 befestigt. Die beiden Befestigungsstellen 21,22 bestehen vorzugsweise aus Gewindelöchern oder Gewindehülsen, in welche entsprechende Befestigungsschrauben 43 an der unteren Akkuhalterung hineingeschraubt sind. Beide Befestigungsstellen 21,22 befinden sich mithin unmittelbar am Sattelrohr 20. Bei der oberen Akkuhalterung 42 hingegen befindet sich nur die untere Befestigungsstelle 23 unmittelbar am Sattelrohr 20. Mit dieser Befestigungsstelle 23 wirkt die untere Befestigungsschraube 44 für die obere Akkuhalterung 42 zusammen. Die zweite, obere Befestigungsstelle 32 für die obere Akkuhalterung 42 hingegen befindet sich an der Rückseite der Sattelklemme 30; mit dieser sattelklemmenseitigen Befestigungsstelle 32 wirkt eine obere Befestigungsschraube 45 für die obere Akkuhalterung 42 zusammen. Die Sattelklemme 30 wiederum sitzt auf einem oberen Fortsatz 25 am Sattelrohr 20. Der Fortsatz 25 hat vorzugsweise einen Rundquerschnitt.

Durch die Verschiebung einer der beiden Befestigungsstellen für die obere Akkuhalterung in die Sattelklemme verlängert sich der Freiraum zur Montage des Akkumulators 40.

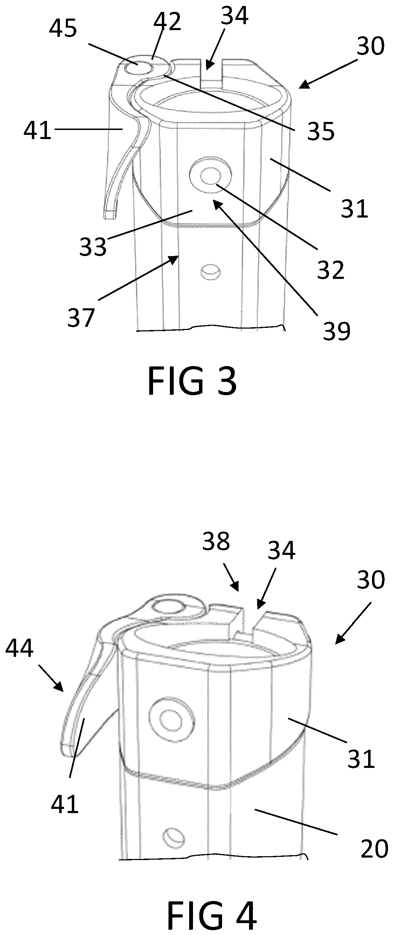

Die Figuren 3 bis 6 zeigen eine bevorzugte Ausgestaltung der Sattelklemme 30. Die Sattelklemme weist eine vergleichsweise kräftige Klemmschelle 31 mit einer bezogen auf die Fahrtrichtung vorderen Vorderseite 38 und einer mit einer Abflachung 33 versehenen Rückseite 37 auf. Die Vorderseite 38 ist mit einem Klemmschlitz 34 versehen, der von einem Klemmbolzen 40 durchgegriffen wird, an dessen einen Ende ein Klemmhebel 41 über einen Schwenkbolzen 45 angeschlossen ist. Der Klemmbolzen 40 durchgreift ein klemmhebelseitiges Führungsloch zu einer Seite des Klemmschlitz 34 und ist, beispielsweise mittels eines Schraubgewindes, in einem Gewindeloch zur anderen Seite des Klemmschlitz 34 verankert. Der Klemmhebel 41 weist ein Exzenterauge 42 auf, welches in eine entsprechend angepasste und positionierte Nut 35 am Außenumfang der Klemmschelle 30 formschlüssig einfasst, um durch Verdrehen des Klemmhebels 41 um den Schwenkbolzen 45 den Klemmspalt 34 zu vergrößern oder zu verkleinern. Die Figuren 3 und 4 lassen gut erkennen, dass die Außenkontur der Klemmschelle 30 im Wesentlichen mit der Umfangskontur des Sattelrohr 20 übereinstimmt. In der dargestellten Stellung des Klemmhebels 41 liegt dieser unter maximaler Minimierung des Klemmspalts 34 mit einem Teilabschnitt am Außenumfang der Klemmschelle 31 an. Allerdings nur in einem oberen Abschnitt des Griffabschnitts 44, da der Griffabschnitt 44 flügelartig gebogen ist, wodurch eine frei von unten zugängliche Griffmulde auch dann zwischen Griffabschnitt 44 des Klemmhebels 41 und der Klemmschelle 31 verbleibt, wenn der Klemmhebel 41 in der Schließstellung positioniert ist.

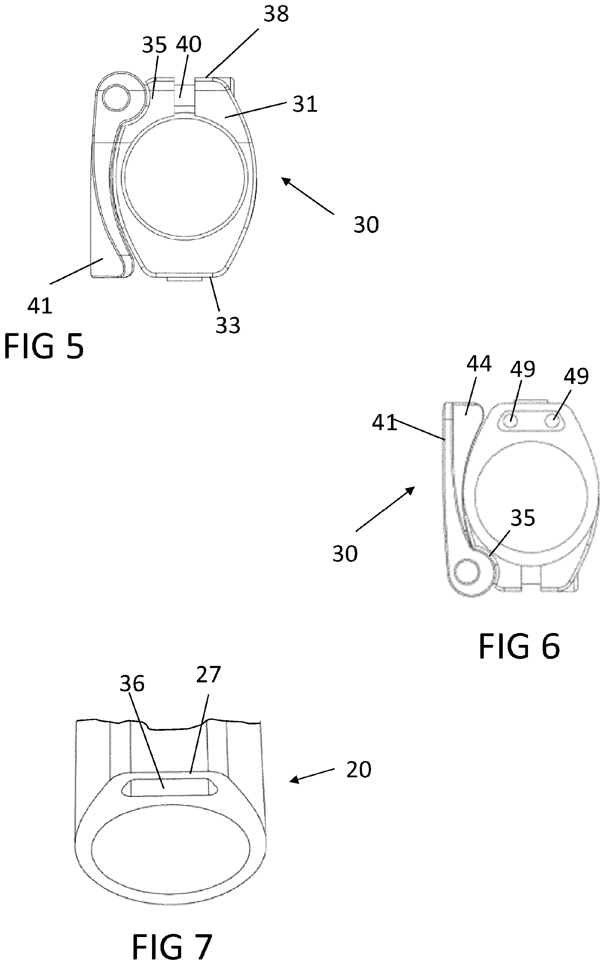

Die Figuren 3 und 4 lassen ferner gut erkennen, dass die Klemmschelle 31 im Bereich der Vorderseite 38 eine geringere Höhe hat als im Bereich der Rückseite 37. Im gezeigten Ausführungsbeispiel beträgt das Verhältnis der Höhen zueinander etwa 1 zu 2. Mittig an der Rückseite 37 ist ein hier verstärktes Gewindeloch als Befestigungseinrichtung 39 ausgebildet, welches die sattelklemmseitige Befestigungsstelle 32 für die obere Befestigungsschraube der oberen Ackuhalterung bildet. Die Befestigungseinrichtung 39 bzw. Befestigungsstelle 32 kann gegebenenfalls nur aus einer Gewindebohrung bestehen, aber auch an einem Einsatz ausgebildet sein, der in eine Einschubkammer (nicht gezeigt) in der Klemmschelle, die dann vorzugsweise an der Unterseite der Klemmschelle offen ist, eingeschoben sein könnte. Im gezeigten Ausführungsbeispiel hingegen springen an der Unterseite der Klemmschelle 31 im Bereich der Rückseite 37 zwei Zapfen 49 vor, die Zentrierzapfen bilden und zugleich eine Verdrehsicherung gewährleisten können, sofern das Sattelrohr 20, wie schematisch in Figur 7 angedeutet, einen Profilquerschnitt hat, der sich aus einem Rundrohrabschnitt und einem integral angeformten Kammerabschnitt 26 mit flacher bzw. abgeflachter Außenfläche 27 zusammensetzt. Die abgeflachte Außenfläche 27 geht bei montierter Sattelklemme 30, wie in den Figuren gezeigt, bündig in die Abflachung 33 an der Rückseite 37 der Sattelklemme 30 über.

Für den Fachmann ergeben sich zahlreiche Modifikationen, die in den Schutzbereich der anhängenden Ansprüche fallen sollen. Die Ausgestaltung der Befestigungsstellen mittels Gewindelöchern bildet die einfachste Ausgestaltung. Die Größe und Höhe der Sattelklemme können variieren. Die Befestigungsstelle an der Sattelklemme könnte auch außermittig sein, insbesondere auch bezogen auf die Gesamthöhe der Sattelklemme an der Hinterseite.

## Patentansprüche

1. Elektrofahrrad mit einem zumindest ein Sattelrohr (20) aufweisenden Fahrradrahmen (1), mit einem am Sattelrohr über eine untere Akkuhalterung (41) und eine obere Akkuhalterung (42) lösbar anordbaren Fahrrad-Akkumulator (40), und mit einer am oberen Ende des Sattelrohrs (20) angeordneten Sattelklemme (30) zur höhenverstellbaren Fixierung eines am Sattelrohr abgestützten Fahrradsattels (6), wobei die obere Akkuhalterung (42) wenigstens zwei voneinander in der Höhe beanstandete Befestigungsstellen (23; 32) am Elektrofahrrad aufweist, **dadurch gekennzeichnet, dass** die obere Befestigungsstelle (32) der oberen Akkuhalterung an der Sattelklemme (30) angeordnet ist.

2. Elektrofahrrad nach Anspruch 1, **dadurch gekennzeichnet, dass** die untere Akkuhalterung (41) wenigstens zwei voneinander in der Höhe beanstandete Befestigungsstellen (21, 22) am Elektrofahrrad aufweist, wobei beide Befestigungsstellen (21, 22) am Sattelrohr (20) ausgebildet sind.

3. Elektrofahrrad nach einem der vorhergehenden Ansprüche, **dadurch gekennzeichnet, dass** die Sattelklemme (30) einen Klemmhebel (41) und eine Klemmschelle (31) aufweist und die Klemmschelle (31) auf ein oberes Ende des Sattelrohrs aufschiebbar ist und eine Befestigungseinrichtung (39) aufweist, die eine der Befestigungsstellen (32) für die obere Akkuhalterung bildet.

4. Elektrofahrrad nach einem der vorhergehenden Ansprüche, **dadurch gekennzeichnet, dass** die Befestigungsstellen (21,22,23) am Sattelrohr und die Befestigungsstelle (32) an der Sattelklemme (30) aus Gewindelöchern bestehen, die vorzugsweise auf einer Längsachse liegen, die parallel zur Rohrachse verläuft.

5. Sattelklemme für ein Elektrofahrrad insbesondere nach einem der Ansprüche 1 bis 4, mit einem zumindest ein Sattelrohr aufweisenden Fahrradrahmen und einem mittels einer unteren Akkuhalterung (41) und einer oberen Akkuhalterung (42) lösbar am Fahrradrahmen anordbaren Fahrrad-Akkumulator (40), und mit einer Sattelklemme (30) zur höhenverstellbaren Fixierung eines am Sattelrohr (20) abgestützten Fahrradsattels, wobei die Sattelklemme (30) einen Klemmhebel (41) und eine Klemmschelle (31) aufweist und die Klemmschelle (31) auf ein oberes Ende des Sattelrohrs aufschiebbar ist, **dadurch gekennzeichnet, dass** die Klemmschelle (32) eine Befestigungseinrichtung (39) aufweist, die eine Befestigungsstelle (32) für eine obere Akkuhalterung bildet.

6. Sattelklemme nach Anspruch 5 oder Elektrofahrrad nach einem der Ansprüche 1 bis 4, **dadurch gekennzeichnet, dass** die Klemmschelle (30) eine Vorderseite (38) aufweist, an der der Klemmhebel (41), vorzugsweise über einen einen Klemmschlitz (34) überbrückenden Klemmbolzen (40), angeordnet ist, und eine Hinterseite (37) aufweist, an der die Befestigungseinrichtung (39) ausgebildet ist, wobei die Klemmschelle (30) an der Hinterseite (37) eine größere Höhe aufweist als an der Vorderseite (38).

7. Sattelklemme oder Elektrofahrrad nach Anspruch 5 oder 6, **dadurch gekennzeichnet, dass** der Klemmhebel (41) eine flügelartig gebogene Grifffläche (44) dergestalt aufweist, dass die Grifffläche (44) im Schließzustand mit einem oberen Rand an der Klemmschelle (31) anliegt und mit einem unteren Rand vom Außenumfang der Klemmschelle (31) beabstandet liegt.

8. Sattelklemme oder Elektrofahrrad nach einem der vorhergehenden Ansprüche, **dadurch gekennzeichnet, dass** das Sattelrohr (20) aus einem Profil, insbesondere Stranggussprofil mit einem Rundrohrabschnitt und einem integral den Rundrohrabschnitt erweiterten Kammerabschnitt (26) mit flacher Außenfläche (27) besteht, wobei die Befestigungsstellen (21,22, 23) an der flachen Außenfläche ausgebildet sind.

9. Sattelklemme oder Elektrofahrrad nach einem der vorhergehenden Ansprüche, **dadurch gekennzeichnet, dass** die Sattelklemme (30) an der Hinterseite mit einem Flachabschnitt (33) mit flacher Außenfläche versehen ist.

10. Sattelklemme oder Elektrofahrrad nach einem der vorhergehenden Ansprüche, **dadurch gekennzeichnet, dass** die Umfangsfläche der Sattelklemme im wesentlichen dieselbe Form und Größe hat wie die Umfangskontur des Sattelrohrs.

11. Sattelklemme oder Elektrofahrrad nach einem der vorhergehenden Ansprüche, **dadurch gekennzeichnet, dass** die Hinterseite der Sattelklemme mit einer nach unten offenen und nach oben geschlossenen Einschubkammer für einen vorzugsweise mit einem Gewindeloch versehenen und in die Einschubkammer einschiebbaren Befestigungseinsatz versehen ist.

12. Sattelklemme oder Elektrofahrrad nach einem der Ansprüche 1 bis 11, **dadurch gekennzeichnet, dass** die Sattelklemme (30) an ihrer Unterseite mit Zentrierstiften oder-Zapfen (49) versehen ist, die ausgelegt sind, in einen Kammerabschnitt (26) am Sattelrohr als Zentrierhilfe und/oder Verdrehsicherung vorzugsweise formschlüssig einzufassen.
